# EUROPEAN PATENT SPECIFICATION

(11) **EP 2 823 213 B1**
(45) Date of publication and mention of the grant of the patent: **19.04.2017**
(21) Application number: 12711747.1
(22) Date of filing: 09.03.2012
(51) Int. Cl.: F17C 5/00, F17C 5/06, F17C 13/02, B60K 15/03

(54) **METHOD FOR DETERMINING START CONDITIONS WHEN REFUELING A GAS TANK**
VERFAHREN ZUR BESTIMMUNG DER ANFANGSBEDINGUNGEN BEIM BEFÜLLEN EINES GASTANKS
PROCEDE POUR DETERMINER LES CONDITIONS DE DEBUT EN RECHARGEANT UN RESERVOIR DE GAZ

(43) Date of publication of application: 14.01.2015
(73) Proprietor: Nel Hydrogen A/S, 7400 Herning (DK)
(72) Inventor: BØDKER, Peter, DK-7400 Herning (DK); PETERSEN, Leif Kappel, DK-6940 Lem St (DK); WISTOFT-IBSEN, Morten, DK-7400 Herning (DK)
(74) Representative: Patentgruppen A/S
(86) International application number: PCT/DK2012/050073
(87) International publication number: WO 2013/131519

(56) References cited:
- WO-A1-2011/061584
- DE-A1- 10 218 678
- DE-A1- 19 705 601
- DE-A1-102006 047 313
- JP-A- 2007 092 927
- US-A- 5 570 729
- US-A1- 2005 178 463

## Description

### Field of the invention

The present invention relates to a method for determining relevant start conditions, particularly relating to the tank pressure, when refueling a gas tank.

### Background of the invention

When refueling gas tanks, especially hydrogen tanks, it is important not to compromise the tank limits, particularly the pressure and the temperature of the gas within the tank. As both of these parameters increase when gas is filled into the tank, these considerations limit the rate by which the tank may be filled. On the other hand, the increase of pressure should be optimized in order to minimize the time needed for refueling the gas tank.

An important precondition for being able to make such an optimization and control the refueling process in a safe manner is to know the start conditions before beginning the refueling. A parameter of particular interest in this matter is the start pressure of the gas in the gas tank.

A well-known method of determining this start pressure involves the use of a pressure pulse. This method is based on pressure equalization between the gas in a dispensing unit and the gas in the gas tank. Thus, when the gas pressure in the refueling nozzle of the dispensing unit equals the gas pressure in the gas tank, the start pressure is defined.

However, this method is not without problems, as gas will inevitably enter the gas tank during the application of such a pressure pulse. This means that the gas pressure and thereby also the temperature in the gas tank increases, and the start conditions are changed.

In the prior art several documents are describing part of the above. Of such documents could be mentioned JP 2007 092927 which discloses a method for control supply of gas to a tank with sufficient precision by means of several shut-off valves in different supply routes. This ensures that a predetermined target value i.e. a maximum supply pressure may be reached.

US 2005/178463 discloses a system capable of refueling a vehicle. A valve is opened at the vehicle and thereby it becomes possible to measure pressure in the hose by a pressure transducer.

DE 197 05 601 discloses that gas pressure is measured in the vehicle tank by a pressure sensor after connecting a refueling hose to the vehicle tank. It is described that the object of the invention is to increase the efficiency of refueling of the storage of the vehicle. This includes connecting a nozzle from the dispenser to the vehicle and open "Rückschlagventile" thereby creating a "gas flow path" from tank of the dispenser system to the tank of the vehicle. The "Rückschlagventile" is opened by sending a pressure pulse through the filling hose.

DE 102180678 relates to a method of refueling a gas tank using a vortex tube to cool the gas on its way from a gas storage to the gas tank. The method described further has the object of avoiding sub-filling and over filling of the gas tank. It is acknowledged that there is a pressure difference between hot and cold gas and that there is a pressure difference between the gas tank and the gas storage but simply describes to measure the pressure by a measuring device.

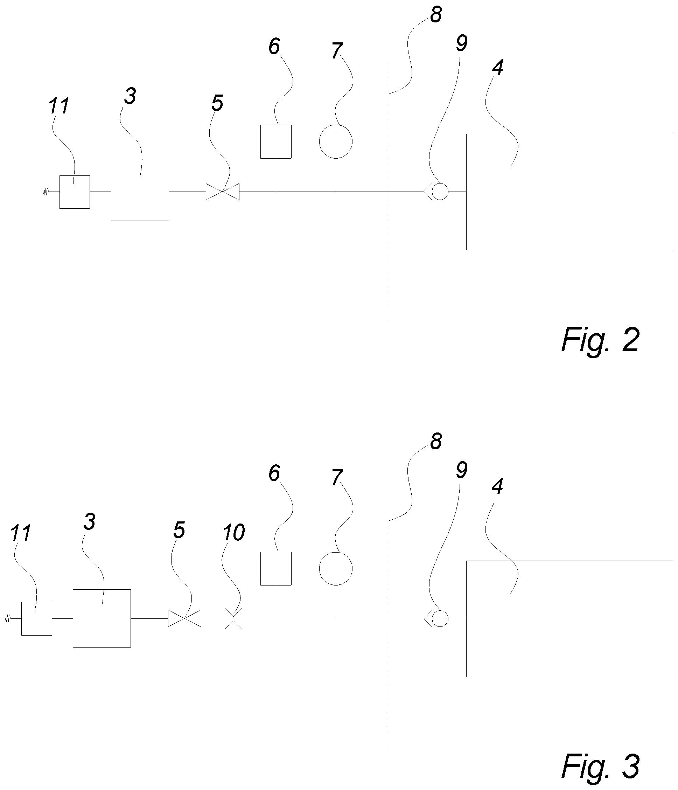

US 5 570 729 describes a method of refueling a gas tank of a vehicle to a given pressure without knowing the volume of the gas tank of the vehicle. From figure 3a and the description related hereto it is found that the vehicle tank is filled with an amount of gas provided in subsequent pulses to arrive at a presettable pressure. As is the case with most of the other cited prior art the start pressure of the vehicle tank before starting the refueling is obtained by equalising the pressure of the vehicle tank and the pressure of the hose / connecting line connecting the vehicle to the tanking plant. Thereby measuring the vehicle tank pressure in the hose / connecting line.

WO 2011/061584 discloses examples of refueling of gas to a gas tank of a vehicle.

### Brief description of the invention

It is an object of the present invention to provide a method for determining the start conditions, especially the start pressure, of a gas tank by means of pressure pulse with only a minimal impact on these start conditions.

The present invention relates to a method for determining the start pressure within a gas tank to be refueled, said method comprising the steps according to claim 1.

In this context, the expression "dispenser volume" is to be understood as a part of the gas dispensing system of the dispenser unit, in which the pressure is controlled very accurately when determining the start pressure within the gas tank and when refueling the gas tank. Typically, this dispenser volume will consist of the outermost part of the gas dispensing system, more specifically the part of the gas dispensing system, which is positioned downstream a pressure regulating device used for controlling the pressure within the dispenser volume. In some embodiments, the dispenser volume or part thereof may be constituted by a gas conduit leading from the pressure regulating device and possibly through a heat exchanger towards the interface between the dispenser unit and the gas tank.

This method has proven to lead to a safe and reliable determination of the start pressure causing only a minimal change of this start pressure due to gas flowing into the gas tank during the determination thereof.

In an embodiment of the invention, the dispenser volume is chosen so that volume of the gas tank to be refueled is at least five times as large, preferably at least 25 times as large, most preferably at least 100 times as large, as the dispenser volume.

Relative volume differences of these sizes have proven to be advantageous for obtaining optimum results of the determination.

In an embodiment of the invention, the dispenser volume is less than 0.004 m³, preferably less than 0.001 m³.

Such dispenser volumes are optimized for use with most common gas tanks of vehicles powered by hydrogen.

In an embodiment of the invention, the step of applying a pressure to the gas in the dispenser volume involves the application of a pressure pulse of short duration obtaining a maximum pressure corresponding at least to the pressure to which the gas tank is rated, and the step of determining the start pressure is performed at the point of time, where gas starts to flow into the gas tank.

This is one of the simplest ways to make sure that pressure equalization between the dispenser volume and the gas tank is obtained.

In a further embodiment of the invention, the method further comprises the step of closing a valve between the dispenser volume and the gas tank as soon as gas starts to flow into the gas tank, so that the amount of gas flowing into the gas tank is kept at a minimum.

In this way, it is assured that the flow of gas into the gas tank is stopped as soon as the pressure equalization has been obtained, and the pressure increase in the gas tank is minimized.

In an embodiment of the invention, the method comprises the additional steps of closing a valve between the dispenser volume and the gas tank before applying the pressure to the gas in the dispenser volume, opening the valve after having applied a pressure to the dispenser volume and either closing the valve again as soon as gas starts to flow into the gas tank and continuing to the step of determining the start pressure or closing the valve and repeating the above these additional steps with a higher pressure, if pressure equalization is not obtained and the gas does not start flowing into the gas tank.

This embodiment represents another way of obtaining pressure equalization between the dispenser volume and the gas tank.

In a further embodiment of the invention, the first pressure applied to the gas in the dispenser volume corresponds at least to the pressure to which the gas tank is rated.

Using the rated tank pressure as the pressure applied to the dispenser volume significantly increases the chance of obtaining pressure equalization between the dispenser volume and the gas tank at the first attempt.

In a further embodiment of the invention, the valve is opened very slowly.

By opening the valve very slowly, the flow of gas into the gas tank is limited.

In another further embodiment of the invention, a narrow orifice is arranged in series with the valve.

Using a narrow orifice is another way of limiting the flow of gas into the gas tank.

By increasing the pressure up to the point of pressure equalization, the pressure differences between the dispenser volume and the gas tank, and thereby also the flow of gas into the gas tank, are minimized.

In a further embodiment of the invention, the pressure is increased continuously.

In another further embodiment of the invention, the pressure is increased stepwise, preferably in steps of less than 60 MPa, for instance in steps of between 5 MPa and 15MPa.

In a further embodiment of the invention, the step of applying a pressure to the gas in the dispenser volume further involves the application of an initial pressure to the gas in the dispenser volume corresponding to a tank pressure communicated from the vehicle, possibly with a minor positive offset, before starting to increase the pressure.

The application of an initial pressure to the gas in the dispenser volume corresponding to a tank pressure communicated from the vehicle, possibly with a minor positive offset, before starting to increase the pressure may reduce the time used for determining the start pressure within the gas tank significantly, as a smaller increase of the pressure is needed to obtain pressure equalization.

In another further embodiment of the invention, the method comprises, before starting to increase the pressure, the additional steps of closing a valve between the dispenser volume and the gas tank, applying a pressure to the gas in the dispenser volume, opening the valve and, if pressure equalization is not obtained, optionally repeating these additional steps one or more times with, each time with a higher pressure applied to the gas in the dispenser volume, wherein the pressure(s) applied to the gas in the dispenser volume is/are between zero and the pressure to which the gas tank is rated, the first of the pressures applied preferably being of 15-20 MPa. The application of one or more pressures before starting the general increase of the pressure may reduce the time used for determining the start pressure within the gas tank significantly, as a smaller increase of the pressure is needed to obtain pressure equalization.

In an embodiment of the application, if pressure equalization is not obtained, instead of repeating the additional steps mentioned above, a pressure corresponding to a tank pressure communicated from the vehicle, possibly with a minor positive offset, is applied to the gas in the dispenser volume before starting to increase the pressure.

Applying a pressure corresponding to a tank pressure communicated from the vehicle, possibly with a minor positive offset, to the gas in the dispenser volume substantially increases the possibility of obtaining pressure equalization at the first attempt.

### Figures

A few exemplary embodiments of the invention will be described in the following with reference to the figures, wherein
- fig. 1: illustrates schematically a pressure-time curve for a pressure pulse and a following refueling of a gas tank,
- fig. 2: illustrates schematically the necessary set-up for performing a method according to a first embodiment of the invention and
- fig. 3: illustrates schematically the necessary set-up for performing a method according to a second embodiment of the invention.

### Detailed description of the invention

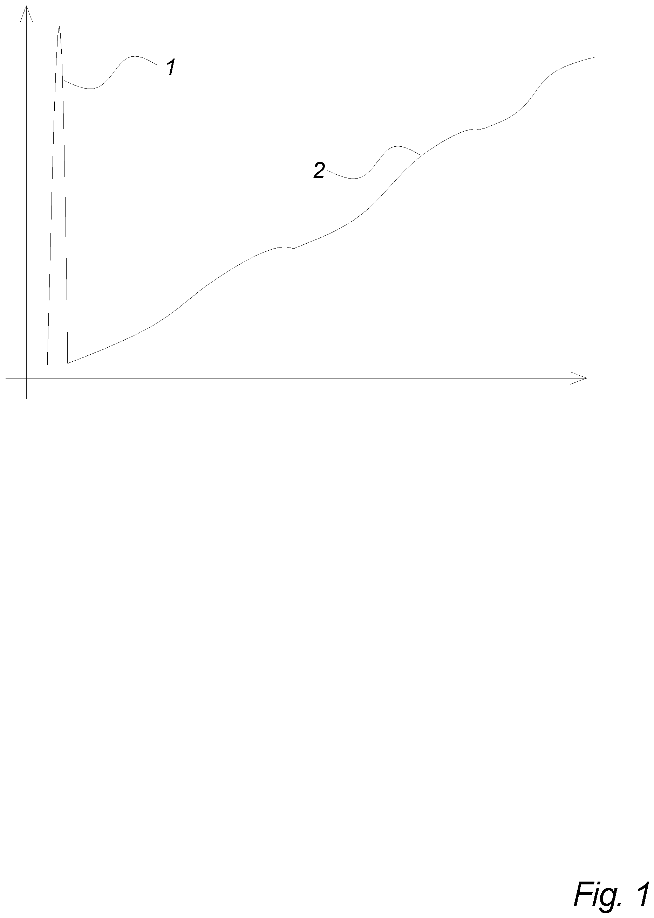

The basic principle behind the present invention is illustrated schematically in fig. 1, which shows schematically a pressure-time curve for the pressure within a dispenser volume 3 connected to a gas tank 4 to be refueled. In order to determine the start pressure within the gas tank 4, a pressure pulse 1 may be applied to the gas in the dispenser volume 3.

If the dispenser volume 3 placed downstream a pressure regulating device 11 is connected to the gas tank 4 through an open valve 5 and a check valve 9 ensuring that gas does not flow out of the gas tank 4 as schematically illustrated in fig. 2, the application of the pressure pulse 1 in the dispenser volume 3 will force the check valve 9 to be opened for a short time. As long as the pressure in the dispenser volume 3 is larger than the start pressure in the gas tank 4, gas will flow from the dispenser volume 3 into the gas tank 4. A flow meter 6 may be used for detecting the times at which the check valve 9 opens and closes, respectively. At these two points of time, the pressure at the interface 8 between the dispenser unit and the gas tank 4 equals the pressure within the gas tank 4. Thus, the start pressure in the gas tank 4 may be determined at these two points of time by means of a pressure meter 7 placed near that interface 8.

When the start pressure has been determined, the refueling can begin, which is indicated by the raising pressure curve 2 in fig. 1. The average rate at which the pressure should be increased and the fueling target pressure to be reached depend on the start pressure in the gas tank 4, on the ambient temperature and on the type of refueling station used for the refueling.

As mentioned above, this method cannot be used without taking into consideration that the entrance of gas into the gas tank 4 during the application of the pressure pulse 1 results in an increased pressure and an increased temperature within the gas tank 4. In other words, the procedure used for determining the start conditions also changes these start conditions.

In order to minimize the effects of the application of a pressure pulse 1 on the start conditions to be determined and to ensure that the refueling is performed in a safe manner, a maximum allowable increase of the pressure in the gas tank 4 of 2.0 MPa during the application of the pressure pulse 1 has been suggested. For small gas tanks 4, however, only a small volume of gas has to be transferred to the gas tank 4 during the application of the pressure pulse 1 for this limit to be exceeded. This is especially a problem, if the volume 3 of the dispenser unit is large compared to the volume of the gas tank 4, which is often the case, since the volume 3 of the dispenser unit is defined by other limitations not taking into account the problematic related to the use of pressure pulses 1.

The present invention provides a solution to this problem by assuring that the dispenser volume 3 is small compared to the volume of the gas tank 4. Preferably, the dispenser volume 3 is chosen so that the volume of the gas tank 4 is at least 5-10 times larger than the dispenser volume. Whereas, for instance, known volumes of gas tanks 4 typically are found in the range between approximately 0.025 m³ and 0.42 m³, the volume of the gas container 3 may be less than 0.004 m³ or even less than 0.001 m³. In principle, the volume can go all the way down to 0, if the small gas container 3 is represented by a small piece of tube, which is pressurized during the application of the pressure pulse 1.

Because the dispenser volume 3 is much smaller than the volume of the gas tank 4, only a minimal amount of gas flows to the gas tank 4 during the application of the pressure pulse 1.

In general, two types of gas tanks 4 are used in vehicles powered by hydrogen. The first type is rated to a pressure of 70 MPa when it is full, and the refueling start pressure may be anywhere between 2 MPa and 70 MPa depending on the amount of gas in the gas tank 4 at the time of refueling. The other type is rated to a full tank pressure of 35 MPa, and the refueling start pressure may be in the range from 2 MPa to 35 MPa.

Thus, in order to be sure that the maximum pressure of the pressure pulse 1 exceeds the start pressure of the gas tank 4, the amplitude of the pressure pulse must exceed 70 MPa, respectively 35 MPa, depending on the type of the tank to be refueled.

Apart from applying the pressure pulse 1 in a well-controlled manner, raising the pressure either continuously or stepwise, several other approaches than the relatively simple application of a pressure pulse 1 as described above may be taken to determine the start pressure of a gas tank 4 to be refueled.

One way is to stop the pressure increase at the interface 8 between the dispenser unit and the gas tank 4 as soon as the flow meter 6 indicates that gas starts to flow through the check valve 9, i.e. when the pressures in the dispenser volume 3 and in the gas tank 4 are equalized. This can be done by closing the valve 5 as soon as the flow meter 6 indicates that there is a flow through the valve 6. After that, the pressure at the interface 8, which can be measured by means of the pressure meter 7, will equal the start pressure in the gas tank 4.

Another method of determining the start pressure within the gas tank 4 is to close the valve 5 and apply a pressure to the dispenser volume 3 corresponding to the maximum pressure of the pressure pulse 1. If the valve 5 is opened very slowly until the flow meter 6 indicates that gas starts flowing through the check valve 9 into the gas tank 4, the valve 5 may be closed again and the start pressure may be measured by the pressure meter 7, because the pressure at the interface 8 is the same as the pressure in the gas tank 4, when the check valve 9 has been opened. In this way, it is assured that the flow of gas into the gas tank 4 is limited to an absolute minimum.

In a similar method a narrow orifice 10 arranged in series with the valve 5 as illustrated schematically in fig. 3 may be used instead of a slowly opening valve 5. When the valve is opened and the equalization of pressures is obtained, the narrow orifice 10 will limit the flow of gas into the gas tank 4, thereby limiting the increase of the pressure therein during the determination of the start pressure.

Yet another method of determining the start pressure within the gas tank 4 may be used to minimize the pressure differences between the gas in the dispenser volume 3 and the gas in the gas tank 4 at the time of pressure equalization. In this method, a relatively low initial pressure of, for instance, 15-20 MPa is applied to the gas in the dispenser volume 3, and the valve 5 is opened. If equalization between the pressures in the dispenser volume 3 and the gas tank 4 is obtained, the valve 5 is closed as described above and the start pressure has been determined. If not, the valve 5 is left open and the pressure in the dispenser volume 3 is increased in relatively small steps of, for instance, 5-15 MPa until pressure equalization is detected by the flow meter 6, at which time the valve 5 is closed and the start pressure can be determined by means of the flow meter 7 as described above.

In variations of this latter method, the application of the initial pressure may be omitted so that the small step increases of the pressures begins from a very low value, such as 5 MPa, or the pressure may be increased continuously instead of stepwise (with or without application of the initial pressure).

Furthermore, this method may be improved if the refueling station and the vehicle are able to communicate with each other. If so, the initial pressure may be chosen to correspond to a tank pressure communicated from the vehicle (perhaps with a small positive offset), whereby the chance of obtaining pressure equalization at the first attempt, thereby decreasing the time needed for the determination of the start pressure, may be significantly increased.

It should be noted that the present invention is not restricted in any way by the descriptions above, which represent a few exemplary and illustrative embodiments only, whereas the scope of the present invention is defined by the following claims.

### List of reference numbers

- 1.: Pressure pulse
- 2.: Increasing pressure during refueling
- 3.: Dispenser volume connected to gas tank
- 4.: Gas tank
- 5.: Valve
- 6.: Flow meter
- 7.: Pressure meter
- 8.: Interface between dispenser and gas tank
- 9.: Check valve
- 10.: Narrow orifice
- 11.: Pressure regulating device

## Claims

1. A method for determining the start pressure within a gas tank (4) to be refueled, said method comprising the steps of:
- connecting the gas tank (4) to a dispenser volume (3) of a dispenser unit, which volume is significantly smaller than the volume of the gas tank (4) to be refueled,
- applying a pressure to the gas in the dispenser volume (3), which pressure is equal to or higher than the pressure within the gas tank (4), so that gas starts to flow from the dispenser volume (3) into the gas tank (4) through a check valve (9), which is a part of the gas tank (4),
- **characterized in that** the applied pressure to the gas in the dispenser volume (3) is increased slowly until gas starts to flow from the dispenser volume (3) into the gas tank, (4)
- stopping the flow of gas by closing a valve (5) between the dispenser volume (3) and the gas tank (4), and
- determining the start pressure by measuring the pressure at the interface (8) between the dispenser unit and the gas tank (4) when gas flow between the dispenser volume (3) and the gas tank (4) is stopped.

2. The method according to claim 1, wherein the dispenser volume (3) is chosen so that volume of the gas tank (4) to be refueled is at least five times as large, preferably at least 25 times as large, most preferably at least 100 times as large, as the dispenser volume (3).

3. The method according to claim 1 or 2, wherein the dispenser volume (3) is less than 0.004 m³, preferably less than 0.001 m³.

4. The method according to any of the preceding claims, further comprising, before starting to increase the pressure, the additional steps of:
- closing the valve (5) between the dispenser volume (3) and the gas tank (4),
- applying a pressure to the gas in the dispenser volume (3),
- opening the valve (5) and,
- if pressure equalization is not obtained, optionally repeating these additional steps one or more times with, each time with a higher pressure applied to the gas in the dispenser volume (3),
wherein the pressure(s) applied to the gas in the dispenser volume (3) is/are between zero and the pressure to which the gas tank is rated, the first of the pressures applied preferably being of 15-20 MPa.

5. The method according to any of the preceding claims, wherein, if pressure equalization is not obtained, instead of repeating the additional steps of claim 4, a pressure corresponding to a tank pressure communicated from the vehicle, possibly with a minor positive offset, is applied to the gas in the dispenser volume (3) before starting to increase the pressure.

6. The method according to any of the preceding claims, wherein
the step of applying a pressure to the gas in the dispenser volume (3) further involves the application of an initial pressure to the gas in the dispenser volume (3) corresponding to a tank pressure communicated from the vehicle, possibly with a minor positive offset, before starting to increase the pressure.

7. The method according to any of the preceding claims, wherein the pressure is increased continuously.

8. The method according to any of claims 1-6, wherein the pressure is increased stepwise, preferably in steps of less than 60 MPa, for instance in steps of between 5 MPa and 15MPa.

9. The method according to any of claims 1-3, further comprising the additional steps of:
- closing the valve (5) between the dispenser volume (3) and the gas tank (4) before applying the pressure to the gas in the dispenser volume (3),
- opening the (5) valve after having applied a pressure to the gas in the dispenser volume (3) and
- either closing the valve (5) again as soon as gas starts to flow into the gas tank (4) and continuing to the step of determining the start pressure
- or closing the valve (5) and repeating these additional steps with a higher pressure, if pressure equalization is not obtained and the gas does not start flowing into the gas tank (4).

10. The method according to claim 9, wherein the first pressure applied to the gas in the dispenser volume (3) corresponds at least to the pressure to which the gas tank (4) is rated.

11. The method according to claim 9 or 10, wherein the valve (5) is opened very slowly.

12. The method according to any of claims 9-10, wherein a narrow orifice (10) is arranged in series with the valve (5).

13. The method according to any claims 1-3, wherein
the step of applying a pressure to the gas in the dispenser volume (3) involves the application of a pressure pulse of short duration obtaining a maximum pressure corresponding at least to the pressure to which the gas tank (4) is rated, and
the step of determining the start pressure is performed at the point of time, where gas starts to flow into the gas tank (4).

14. The method according to claim 13, further comprising the step of:
- closing a valve (5) between the dispenser volume (3) and the gas tank (4) as soon as gas starts to flow into the gas tank (4), so that the amount of gas flowing into the gas tank is kept at a minimum.

## Patentansprüche

1. Verfahren zum Feststellen des Startdrucks in einem zu betankenden Gastank (4), wobei das Verfahren die folgenden Schritte umfasst:
- Verbinden des Gastanks (4) mit einem Betankungsvolumen (3) einer Betankungseinheit, wobei das Volumen erheblich kleiner ist als das Volumen des zu betankenden Gastanks (4),
- Aufbauen eines Drucks in dem Gas im Betankungsvolumen (3), wobei der Druck gleich dem Druck im Gastank (4) oder größer als dieser ist, so dass Gas beginnt durch ein Rückschlagventil (9), das Teil des Gastanks (4) ist, vom Betankungsvolumen (3) in den Gastank (4) zu fließen,
- **dadurch gekennzeichnet, dass** der in dem Gas im Betankungsvolumen (3) aufgebaute Druck langsam erhöht wird, bis Gas beginnt vom Betankungsvolumen (3) in den Gastank (4) zu fließen,
- Stoppen des Gasflusses durch das Schließen eines Ventils (5) zwischen dem Betankungsvolumen (3) und dem Gastank (4), und
- Feststellen des Startdrucks durch das Messen des Drucks an der Schnittstelle (8) zwischen der Betankungseinheit und dem Gastank (4) wenn der Gasfluss zwischen dem Betankungsvolumen (3) und dem Gastank (4) gestoppt hat.

2. Verfahren nach Anspruch 1, wobei das Betankungsvolumen (3) so gewählt ist, dass das Volumen des zu betankenden Gastanks (4) wenigstens um das Fünffache größer ist als das Betankungsvolumen (3), vorzugsweise um das 25-fache größer und am bevorzugtesten um das 100-fache größer.

3. Verfahren nach Anspruch 1 oder 2, wobei das Betankungsvolumen (3) weniger als 0,004 m³ beträgt und vorzugsweise weniger als 0,001 m³.

4. Verfahren nach einem der vorhergehenden Ansprüche, das, vor dem Beginn der Erhöhung des Drucks, die folgenden zusätzlichen Schritte umfasst:
- Schließen des Ventils (5) zwischen dem Betankungsvolumen (3) und dem Gastank (4),
- Aufbauen eines Drucks in dem Gas im Betankungsvolumen (3),
- Öffnen des Ventils (5), und
- falls ein Druckausgleich nicht erreicht ist, optional ein- oder mehrmaliges Wiederholen der zusätzlichen Schritte, wobei jedes Mal ein höherer Druck in dem Gas im Betankungsvolumen (3) aufgebaut wird,
wobei der oder die Drücke, die in dem Gas im Betankungsvolumen (3) aufgebaut werden, zwischen Null und dem Druck liegen, für den der Gastank ausgelegt ist, wobei der erste der aufgebauten Drücke vorzugsweise bei 15-20 MPa liegt.

5. Verfahren nach einem der vorhergehenden Ansprüche, wobei, falls ein Druckausgleich nicht erreicht ist, anstatt der Wiederholung der zusätzlichen Schritte aus Anspruch 4 vor dem Beginn der Erhöhung des Drucks ein Druck in dem Gas im Betankungsvolumen (3) aufgebaut wird, der, möglicherweise mit einem kleinen positiven Offset, einem Tankdruck entspricht, der vom Fahrzeug mitgeteilt wird.

6. Verfahren nach einem der vorhergehenden Ansprüche, wobei der Schritt zum Aufbauen eines Drucks in dem Gas im Betankungsvolumen (3) vor dem Beginn der Erhöhung des Drucks außerdem das Aufbauen eines anfänglichen Drucks in dem Gas im Betankungsvolumen (3) umfasst, der, möglicherweise mit einem kleinen positiven Offset, einem Tankdruck entspricht, der vom Fahrzeug mitgeteilt wird.

7. Verfahren nach einem der vorhergehenden Ansprüche, wobei der Druck kontinuierlich erhöht wird.

8. Verfahren nach einem der Ansprüche 1 bis 6, wobei der Druck schrittweise erhöht wird, vorzugsweise in Schritten von weniger als 60 MPa, beispielsweise in Schritten von zwischen 5 MPa und 15 MPa.

9. Verfahren nach einem der Ansprüche 1 bis 3, das außerdem die folgenden zusätzlichen Schritte umfasst:
- Schließen des Ventils (5) zwischen dem Betankungsvolumen (3) und dem Gastank (4) vor dem Aufbauen des Drucks in dem Gas im Betankungsvolumen (3),
- Öffnen des Ventils (5), nachdem in dem Gas im Betankungsvolumen (3) ein Druck aufgebaut wurde, und
- entweder das Wiederschließen des Ventils (5) sobald Gas beginnt in den Gastank (4) zu fließen und Fortfahren mit dem Schritt zum Feststellen des Startdrucks,
- oder das Schließen des Ventils (5) und das Wiederholen dieser zusätzlichen Schritte mit einem höheren Druck, wenn ein Druckausgleich nicht erreicht ist und das Gas nicht beginnt in den Gastank (4) zu fließen.

10. Verfahren nach Anspruch 9, wobei der erste Druck, der in dem Gas im Betankungsvolumen (3) aufgebaut wird, wenigstens dem Druck entspricht, für den der Gastank (4) ausgelegt ist.

11. Verfahren nach Anspruch 9 oder 10, wobei das Ventil (5) sehr langsam geöffnet wird.

12. Verfahren nach einem der Ansprüche 9 bis 10, wobei in Reihe mit dem Ventil (5) eine schmale Öffnung (10) angeordnet ist.

13. Verfahren nach einem der Ansprüche 1 bis 3, wobei
der Schritt zum Aufbauen eines Drucks in dem Gas im Betankungsvolumen (3) die Anwendung eines Druckimpulses von kurzer Dauer einbezieht, der einen maximalen Druck erreicht, der wenigstens dem Druck entspricht, für den der Gastank (4) ausgelegt ist, und
der Schritt zum Feststellen des Startdrucks zu dem Zeitpunkt ausgeführt wird, zu dem Gas beginnt in den Gastank (4) zu fließen.

14. Verfahren nach Anspruch 13, außerdem den folgenden Schritt umfassend:
- Schließen eines Ventils (5) zwischen dem Betankungsvolumen (3) und dem Gastank (4) sobald Gas beginnt in den Gastank (4) zu fließen, derart, dass die Gasmenge, die in den Gastank fließt, minimal gehalten wird.

## Revendications

1. Procédé de détermination de la pression de départ dans un réservoir de gaz (4) à réapprovisionner, ledit procédé comprenant les étapes de :
- lier le réservoir de gaz (4) à un volume de distributeur (3) d'une unité de distributeur, lequel volume est significativement plus petit que le volume du réservoir de gaz (4) à réapprovisionner,
- appliquer une pression au gaz dans le volume de distributeur (3), laquelle pression est égale ou supérieure à la pression dans le réservoir de gaz (4) de sorte que du gaz commence à s'écouler du volume de distributeur (3) jusque dans le réservoir de gaz (4) par un clapet antiretour (9) qui fait partie du réservoir de gaz (4),
- **caractérisé en ce que** la pression appliquée au gaz dans le volume de distributeur (3) est augmentée lentement jusqu'à ce que du gaz commence à s'écouler du volume de distributeur (3) jusque dans le réservoir de gaz (4),
- on arrête le flux de gaz par fermeture d'un clapet (5) entre le volume de distributeur (3) et le réservoir de gaz (4) et
- on détermine la pression de départ par mesure de la pression sur l'interface (8) entre l'unité de distributeur et le réservoir de gaz (4) lorsque le flux de gaz entre le volume de distributeur (3) et le réservoir de gaz (4) est arrêté.

2. Procédé selon la revendication 1, dans lequel le volume de distributeur (3) est choisi de sorte que le volume du réservoir de gaz (4) à réapprovisionner est au moins cinq fois plus grand, de préférence au moins 25 fois plus grand, plus préférentiellement au moins 100 fois plus grand que le volume de distributeur (3).

3. Procédé selon la revendication 1 ou 2, dans lequel le volume de distributeur (3) est inférieur à 0,004 m³, de préférence inférieur à 0,001 m³.

4. Procédé selon l'une quelconque des revendications précédentes, comprenant en outre avant de commencer à augmenter la pression, les étapes supplémentaires de :
- fermer le clapet (5) entre le volume de distributeur (3) et le réservoir de gaz (4),
- appliquer une pression au gaz dans le volume de distributeur (3),
- ouvrir le clapet (5) et,
si l'égalisation de pression n'est pas obtenue, répéter éventuellement ces étapes supplémentaires une ou plusieurs fois avec chaque fois avec une pression plus élevée appliquée au gaz dans le volume de distributeur (3),
dans lequel la/les pression(s) appliquée(s) au gaz dans le volume de distributeur (3) est/sont entre zéro et la pression à laquelle le réservoir de gaz est évalué, la première des pressions appliquées étant de préférence de 15 à 20 MPa.

5. Procédé selon l'une quelconque des revendications précédentes, dans lequel si l'égalisation de pression n'est pas obtenue, au lieu de répéter les étapes supplémentaires selon la revendication 4, une pression correspondant à une pression de réservoir communiquée du véhicule, optionnellement avec un décalage positif faible, est appliquée au gaz dans le volume de distributeur (3) avant de commencer à augmenter la pression.

6. Procédé selon l'une quelconque des revendications précédentes, dans lequel l'étape d'appliquer une pression au gaz dans le volume de distributeur (3) implique en outre l'application d'une pression initiale au gaz dans le volume de distributeur (3) correspondant à une pression de réservoir communiquée du véhicule, optionnellement avec un décalage positif faible avant de commencer à augmenter la pression.

7. Procédé selon l'une quelconque des revendications précédentes, dans lequel la pression est augmentée en continu.

8. Procédé selon l'une quelconque des revendications 1 à 6, dans lequel la pression est augmentée progressivement, de préférence par étapes inférieures à 60 MPa, par exemple par étapes entre 5 MPa et 15 MPa.

9. Procédé selon l'une quelconque des revendications 1 à 3, comprenant en outre les étapes supplémentaires de :
fermer le clapet (5) entre le volume de distributeur (3) et le réservoir de gaz (4) avant d'appliquer la pression au gaz dans le volume de distributeur (3),
- ouvrir le clapet (5) après avoir appliqué une pression au gaz dans le volume de distributeur (3) et
- soit fermer le clapet (5) de nouveau dès que du gaz commence à s'écouler dans le réservoir de gaz (4) et poursuivre à l'étape de déterminer la pression de départ,
- soit fermer le clapet (5) et répéter ces étapes supplémentaires avec une pression plus élevée si l'égalisation de pression n'est pas obtenue et le gaz ne commence pas à s'écouler dans le réservoir de gaz (4).

10. Procédé selon la revendication 9, dans lequel la première pression appliquée au gaz dans le volume de distributeur (3) correspond au moins à la pression, à laquelle le réservoir de gaz (4) est évalué.

11. Procédé selon la revendication 9 ou 10, dans lequel le clapet (5) est ouvert très lentement.

12. Procédé selon l'une quelconque des revendications 9 à 10, dans lequel un orifice étroit (10) est agencé en série avec le clapet (5).

13. Procédé selon l'une quelconque des revendications 1 à 3, dans lequel
l'étape d'appliquer une pression au gaz dans le volume de distributeur (3) comprend l'application d'une pulsation de pression de courte durée obtenant une pression maximale correspondant au moins à la pression à laquelle le réservoir de gaz (4) est évalué et
l'étape de déterminer la pression de départ est réalisée au moment où du gaz commence à s'écouler dans le réservoir de gaz (4).

14. Procédé selon la revendication 13, comprenant en outre l'étape de :
- fermer un clapet (5) entre le volume de distributeur (3) et le réservoir de gaz (4) dès que du gaz commence à s'écouler dans le réservoir de gaz (4) de sorte que la quantité de gaz s'écoulant dans le réservoir de gaz soit maintenue à un minimum.
